# EUROPEAN PATENT APPLICATION

(11) **EP 4 557 654 A1**
(43) Date of publication of application: **21.05.2025**
(21) Application number: 23838806.0
(22) Date of filing: 04.07.2023
(51) Int. Cl.: H04L 5/00

(54) **METHOD AND APPARATUS FOR COMMUNICATION NODE USED FOR WIRELESS COMMUNICATION**

(30) Priority: 12.07.2022 CN 202210817508
(71) Applicant: SHANGHAI LANGBO COMMUNICATION TECHNOLOGY COMPANY LIMITED, Shanghai 200240 (CN)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/105677
(87) International publication number: WO 2024/012314

(57) **Abstract**

Disclosed in the present application are a method and apparatus for a communication node used for wireless communication. The method comprises: a communication node sending first signaling, wherein the first signaling comprises a first domain, the first domain comprises a first numerical value, and the first numerical value indicates the data volume of at least a first data packet set. The first data packet set comprises at least one data packet; each data packet in the first data packet set is associated with a first identifier; and the first identifier is an identifier other than an LCG ID.

## Description

### TECHNICAL FIELD

The present application relates to transmission methods and devices in wireless communication systems, and relates to methods and devices for high data rate services, particularly for XR services.

### BACKGROUND

Application scenarios of future wireless communication systems are becoming increasingly diversified, and different application scenarios have different performance demands on systems. In order to meet different performance requirements of various application scenarios, the 3rd Generation Partner Project (3GPP) Radio Access Network (RAN) #72 plenary decided to conduct the study of New Radio (NR), or what is called fifth Generation (5G). The work Item (WI) of New Radio (NR) was approved at the 3GPP RAN #75 plenary to standardize the NR. Among the studies, the mechanism of efficient resource allocation and scheduling for XR (i.e., eXtended Reality) service characteristics is an important research direction.

### SUMMARY

In the current protocol, the base station performs dynamic scheduling based on the data volume report by the UE (i.e., User Equipment), for example, a Buffer Status Report (BSR), and the BSR counting the total data volume in the unit of LCG (i.e., Logical Channel Group). The XR services including VR service, AR service and CG service, featured with high rate and low delay, are also interactive services that are demanding on the time of response of services, for instance, the information of gestures of a user is conveyed to a server, and the images reflected by the server need to be screened on the user's terminal in a very short time, otherwise, the user will sense an obvious delay and the user experience will be influenced. An XR service contains all kinds of data, like video, audio or data used for controlling various sensors, which may be partially dependent on each other. Scheduling uplink resources in accordance with the existing BSR mechanism cannot meet the demands of XR services, and therefore, there is a need to enhance the mechanism for reporting data volume.

To address the above problem, the present application provides a solution for data volume reporting. In the description of the above problems, XR service is used as an example; the present application is also applicable to, for example, other high data rate service scenarios; further, although the present application gives specific implementation methods for XR, the present application can also be used in, for example, LTE scenarios, to achieve technical effects similar to MT-SDT in RRC inactive state. F109urther, though originally targeted at the Uu air interface, the present application also applies to the PC5 interface. Further, the present application is designed targeting terminal-base station scenario, but can be extended to Vehicle-to-Everything (V2X), terminal-relay communications, as well as relay-base station communications, where similar technical effects can be achieved. Further, the present application is designed targeting terminal-base station scenario, but can be extended to Integrated Access and Backhaul (IAB) communications, where similar technical effects can be achieved. Further, although the present application is intended for Terrestrial Network (TN) scenarios, the present application is also applicable to Non-Terrestrial Network (NTN) communication scenarios, where technical effects similar to those in TN scenarios can be achieved. Additionally, the adoption of a unified solution for various scenarios contributes to the reduction of hardcore complexity and costs.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

It should be noted that if no conflict is incurred, embodiments in any node in the present application and the characteristics of the embodiments are also applicable to any other node, and vice versa. What's more, the embodiments in the present application and the characteristics in the embodiments can be arbitrarily combined if there is no conflict.

The present application provides a method in a first node for wireless communications, comprising:
transmitting a first signaling, the first signaling including a first field, the first field including a first value, the first value indicating a data volume of at least a first packet set;
herein, the first packet set includes at least one packet; each packet in the first packet set is associated to a first identifier; the first identifier is an identifier other than a LCG Identifier (ID).

In one embodiment, a problem to be solved in the present application includes: how to report the data volume for XR services.

In one embodiment, a problem to be solved in the present application includes: how to improve the efficiency of resource allocation.

In one embodiment, a problem to be solved in the present application includes: how to shorten the transmission delay by resource scheduling.

In one embodiment, a problem to be solved in the present application includes: how to avoid that the data volume of XR packets with dependencies cannot be reported in time due to insufficiency of resources used for transmitting BSR.

In one embodiment, characteristics of the above method include: the data volume reported being independent of the LCG.

In one embodiment, characteristics of the above method include: data volumes belonging to the same first packet set are reported in the same field.

In one embodiment, characteristics of the above method include: data volumes belonging to the same first packet set are reported simultaneously.

In one embodiment, characteristics of the above method include: the at least first packet set being used to determine the first value being not dependent on the LCG.

In one embodiment, characteristics of the above method include: the at least first packet set being used to determine the first value being not dependent on all Logical Channels (LC) in one LCG.

In one embodiment, characteristics of the above method include: enabling the base station to obtain more accurate service information.

In one embodiment, an advantage of the above method includes: avoiding that uplink resources scheduled by the base station are not capable of transmitting all packets of the first packet set.

In one embodiment, an advantage of the above method includes: enabling XR packets with dependencies to be scheduled in a timely manner.

In one embodiment, an advantage of the above method includes: reducing packet loss.

In one embodiment, an advantage of the above method includes: shortening transmission latency.

According to one aspect of the present application, characterized in that the first packet set includes at least a first packet and a second packet, the first packet being associated to a first LCG and the second packet being associated to a second LCG, the first LCG being identified by the first LCG ID, and the second LCG being identified by the second LCG ID, the first LCG ID being unequal to the second LCG ID.

According to one aspect of the present application, characterized in that the first LCG and the second LCG are each an LCG in a first candidate LCG set, the first candidate LCG set is a subset of a first LCG set, and the first LCG set comprises at least one LCG that is not part of the first candidate LCG set.

According to one aspect of the present application, characterized in that the first packet set includes at least a first packet, the first packet being associated to a first LCG, the first LCG being identified by the first LCG ID; the first value does not indicate a data volume of a second packet; the second packet is associated to the first LCG, and the second packet does not belong to the first packet set.

According to one aspect of the present application, characterized in that the first signaling includes a second field, the second field indicating the first LCG ID, the second field being associated to the first field.

According to one aspect of the present application, characterized in that the first signaling includes a third field, the third field indicating the first identifier, the third field being associated to the first field.

According to one aspect of the present application, characterized in that the first signaling includes a fourth field, the fourth field being used to indicate a first time length, the first time length being related to the first packet set.

The present application provides a method in a second node for wireless communications, comprising:
receiving a first signaling, the first signaling including a first field, the first field including a first value, the first value indicating a data volume of at least a first packet set;
herein, the first packet set includes at least one packet; each packet in the first packet set is associated to a first identifier; the first identifier is an identifier other than a LCG ID.

According to one aspect of the present application, characterized in that the first packet set includes at least a first packet and a second packet, the first packet being associated to a first LCG and the second packet being associated to a second LCG, the first LCG being identified by the first LCG ID, and the second LCG being identified by the second LCG ID, the first LCG ID being unequal to the second LCG ID.

According to one aspect of the present application, characterized in that the first LCG and the second LCG are each an LCG in a first candidate LCG set, the first candidate LCG set is a subset of a first LCG set, and the first LCG set comprises at least one LCG that is not part of the first candidate LCG set.

According to one aspect of the present application, characterized in that the first packet set includes at least a first packet, the first packet being associated to a first LCG, the first LCG being identified by the first LCG ID; the first value does not indicate a data volume of a second packet; the second packet is associated to the first LCG, and the second packet does not belong to the first packet set.

According to one aspect of the present application, characterized in that the first signaling includes a second field, the second field indicating the first LCG ID, the second field being associated to the first field.

According to one aspect of the present application, characterized in that the first signaling includes a third field, the third field indicating the first identifier, the third field being associated to the first field.

According to one aspect of the present application, characterized in that the first signaling includes a fourth field, the fourth field being used to indicate a first time length, the first time length being related to the first packet set.

The present application provides a first node for wireless communications, comprising:
a first transmitter, transmitting a first signaling, the first signaling including a first field, the first field including a first value, the first value indicating a data volume of at least a first packet set;
herein, the first packet set includes at least one packet; each packet in the first packet set is associated to a first identifier; the first identifier is an identifier other than a LCG ID.

The present application provides a second node for wireless communications, comprising:
a first receiver, receiving a first signaling, the first signaling including a first field, the first field including a first value, the first value indicating a data volume of at least a first packet set;
herein, the first packet set includes at least one packet; each packet in the first packet set is associated to a first identifier; the first identifier is an identifier other than a LCG ID.

In one embodiment, compared with the prior art, the present application is advantageous in the following aspects:
- Avoiding that the uplink resources scheduled by the base station are not capable of transmitting all packets of the first packet set;
- Enabling XR packets with dependencies to be scheduled in a timely manner;
- Reducing packet loss;
- Reducing transmission delay.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of transmission of a first signaling according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of a first communication device and a second communication device according to one embodiment of the present application.
FIG. 5 illustrates a flowchart of radio signal transmission according to one embodiment of the present application.
FIG. 6 illustrates a schematic diagram of a first packet set including at least a first packet and a second packet according to one embodiment of the present application.
FIG. 7 illustrates a schematic diagram of a first value not indicating the data volume of a second packet according to one embodiment of the present application.
FIG. 8 illustrates a schematic diagram of a first signaling including a second field according to one embodiment of the present application.
FIG. 9 illustrates a schematic diagram of a first signaling including a third field according to one embodiment of the present application.
FIG. 10 illustrates a schematic diagram of a first signaling including a fourth field according to one embodiment of the present application.
FIG. 11 illustrates a schematic diagram of a first signaling according to one embodiment of the present application.
FIG. 12 illustrates a schematic diagram of a first signaling according to another embodiment of the present application.
FIG. 13 illustrates a structure block diagram of a processing device used in a first node according to one embodiment of the present application.
FIG. 14 illustrates a structure block diagram of a processing device used in a second node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

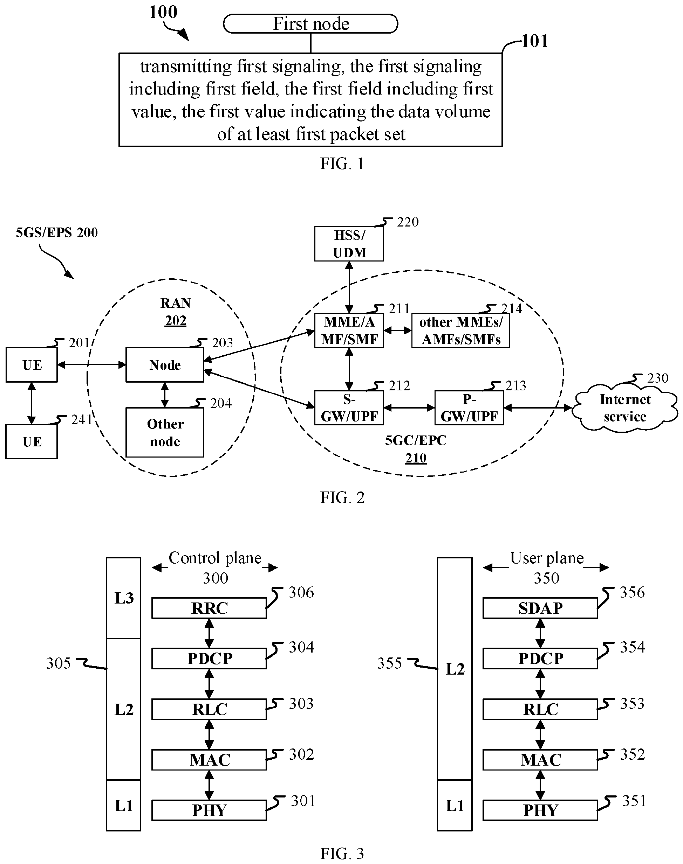

Embodiment 1 illustrates a flowchart of transmission of a first signaling according to one embodiment of the present application, as shown in FIG. 1. In FIG. 1, each step represents a step, it should be particularly noted that the sequence order of each box herein does not imply a chronological order of steps marked respectively by these boxes.

In Embodiment 1, the first node in the present application transmits a first signaling in step 101, the first signaling including a first field, the first field including a first value, the first value indicating a data volume of at least a first packet set; herein, the first packet set includes at least one packet; each packet in the first packet set is associated to a first identifier; the first identifier is an identifier other than a LCG ID.

In one embodiment, the first signaling includes BSR in its name.

In one embodiment, the first signaling does not include BSR in its name.

In one embodiment, the first signaling is transmitted through an Uplink Shared Channel (UL-SCH).

In one embodiment, the first signaling is transmitted via an air interface.

In one embodiment, the first signaling is UpLink (UL) signaling.

In one embodiment, the first signaling is SideLink (SL) signaling.

In one embodiment, the first signaling is Backhaul link signaling.

In one embodiment, the first signaling is for a MAC Entity.

In one embodiment, the first signaling is for a Master Cell Group (MCG).

In one embodiment, the first signaling is for a Secondary Cell Group (SCG).

In one embodiment, the first signaling is generated at a MAC sublayer.

In one embodiment, the first signaling belongs to a MAC Protocol Data Unit (PDU).

In one embodiment, the first signaling belongs to a MAC subPDU.

In one embodiment, the first signaling is a MAC PDU.

In one embodiment, the first signaling is a MAC subPDU.

In one embodiment, the first signaling is a MAC Control Element (CE).

In one embodiment, the first signaling is a BSR MAC CE.

In one embodiment, the first signaling is an XR-specific BSR MAC CE.

In one embodiment, the first signaling is an XR-specific MAC CE.

In one embodiment, the first signaling is identified by a MAC subheader.

In one embodiment, the first signaling is identified by a Logical Channel ID (LCID) field in a MAC subheader.

In one embodiment, the first signaling is identified by an extended LCID (eLCID) field in a MAC subheader.

In one embodiment, the first signaling belongs to one MAC sub-PDU, the one MAC sub-PDU comprising a MAC subheader, the one MAC subheader comprising an LCID field, the LCID field not being set to any one of 59 or 60 or 61 or 62.

In one embodiment, the first signaling belongs to one MAC sub-PDU, the one MAC sub-PDU comprising a MAC subheader, the one MAC subheader comprising an LCID field, the LCID field being set to any one of 59 or 60 or 61 or 62.

In one embodiment, the first signaling belongs to one MAC sub-PDU, the one MAC sub-PDU comprising a MAC subheader, the one MAC subheader comprising an LCID field, the LCID field being set to an integer not less than 37 and not greater than 43.

In one embodiment, the first signaling belongs to one MAC sub-PDU, the one MAC sub-PDU comprising a MAC subheader, the one MAC subheader comprising an eLCID field, the eLCID field being set to an integer not less than 0 and not greater than 227.

In one embodiment, the first signaling does not include an LCG ID field.

In one embodiment, the first signaling includes an LCG ID field.

In one embodiment, the first signaling does not include a LCGᵢ field.

In one embodiment, the first signaling includes a LCGᵢ field.

In one embodiment, the first signaling comprises Q1 octet(s).

In one embodiment, Q1 is equal to 1.

In one embodiment, Q1 is equal to 2.

In one embodiment, Q1 is predefined.

In one embodiment, Q1 is of fixed size.

In one embodiment, Q1 is variable.

In one embodiment, the first field is an octet in the first signaling.

In one embodiment, the first field is a portion of bits in an octet in the first signaling.

In one embodiment, the first field is two octets in the first signaling.

In one embodiment, the first field is a portion of bits in two octets in the first signaling.

In one embodiment, the first signaling includes at least the first field.

In one embodiment, the first signaling includes only the first field.

In one embodiment, the first signaling includes only the first field and a reserved field.

In one embodiment, the first signaling includes a reserved field.

In one embodiment, the first signaling does not include a reserved field.

In one embodiment, the reserved field is an R field.

In one embodiment, if the first signaling includes the reserved field, the reserved field is set to any value.

In one embodiment, if the first signaling includes the reserved field, the reserved field is set to 0.

In one embodiment, if the first signaling includes the reserved field, the reserved field is set to 1.

In one embodiment, the first field is a data volume report field.

In one embodiment, the first field indicates a data volume report.

In one embodiment, the first field is a Buffer Size field.

In one embodiment, the first field is a Data Size field.

In one embodiment, the first field is a Data Size field, and the first signaling includes a Buffer Size field, the Data Size field being different from the Buffer Size field.

In one embodiment, the first field is a Data Size field, and the first signaling does not include a Buffer Size field, the Data Size field being different from the Buffer Size field.

In one embodiment, the first field is used to indicate a data volume.

In one embodiment, the first field is used to indicate a minimum value for the data volume of the first-type packet set to be transmitted.

In one embodiment, the first field is used to indicate a maximum value for the data volume of the first-type packet set to be transmitted.

In one embodiment, the first field is used to indicate a data volume for the first object.

In one embodiment, the first field is used to indicate the total amount of data available for the first object.

In one embodiment, the first field is used to indicate a minimum value for the data volume for the first object.

In one embodiment, the first field is used to indicate a maximum value for the data volume for the first object.

In one embodiment, the first field is used to indicate a buffer size.

In one embodiment, the first field is used to indicate a buffered data volume.

In one embodiment, the first field is used to indicate an expected data volume.

In one embodiment, the first field is used to indicate a data volume remaining for an object.

In one embodiment, the first field is used to indicate a data volume to be transmitted with respect to an object.

In one embodiment, the first field is used to indicate a data volume buffered for an object.

In one embodiment, the first object is a logical channel and the first packet set is associated to the logical channel.

In one embodiment, the first object is a Data Radio Bearer (DRB) and the first packet set is associated to the DRB.

In one embodiment, the first object includes the first packet set.

In one embodiment, the first object includes only the first packet set.

In one embodiment, the first object is the first packet set.

In one embodiment, the first object includes at least one packet set, the at least one packet set including the first packet set.

In one subembodiment, the at least one packet set is associated to the same LCG.

In one subembodiment, the at least one packet set is associated to at least one LCG.

In one subembodiment, the at least one packet set is associated to one or more LCGs.

In one subembodiment, the at least one packet set is not associated to more than one LCG.

In one subembodiment, the at least one packet set includes one or more packet sets.

In one subembodiment, the at least one packet set includes a plurality of packet sets.

In one embodiment, the data volume does not count a Radio Link Control (RLC) subheader.

In one embodiment, the data volume does not count a MAC subheader.

In one embodiment, the data volume is the total amount of data available.

In one embodiment, the data volume is measured in bytes.

In one embodiment, the data volume is measured in bits.

In one embodiment, the first field is a field in the first signaling.

In one embodiment, the first field is a MAC field.

In one embodiment, the first field comprises K1 bits, the K1 being a positive integer.

In one embodiment, K1 is equal to 5.

In one embodiment, K1 is equal to 8.

In one embodiment, K1 is equal to 9.

In one embodiment, K1 is equal to 10.

In one embodiment, K1 is equal to 11.

In one embodiment, K1 is equal to 12.

In one embodiment, K1 is equal to 13.

In one embodiment, K1 is equal to 14.

In one embodiment, K1 is equal to 15.

In one embodiment, K1 is equal to 16.

In one embodiment, K1 is predefined.

In one embodiment, K1 is of fixed size.

In one embodiment, K1 is variable.

In one embodiment, the first field is indicative of the first value.

In one embodiment, the first field is set to the first value.

In one embodiment, the first field has a value being the first value.

In one embodiment, the first value is a value of a data volume.

In one embodiment, the first value is an index of a data volume.

In one embodiment, the first value is a positive integer.

In one embodiment, the first value is a non-negative integer.

In one embodiment, the first value is an integer not less than 0 and not greater than (2^{K1} - X1), the X1 being an integer not less than 1.

In one subembodiment, X1 is equal to 1.

In one subembodiment, X1 is greater than 1.

In one subsidiary embodiment of the above subembodiment, X1 is equal to 2.

In one subsidiary embodiment of the above subembodiment, X1 is greater than 2.

In one subsidiary embodiment of the above subembodiment, for the first field, integer(s) between (2^{K1} - X1 + 1) and (2^{K1} - 1) is(are) reserved.

In one subsidiary embodiment of the above subembodiment, for the first field, integer(s) between (2^{K1} - X1 + 1) and (2^{K1} - 1) is(are) used to indicate the presence of other data.

In one subsidiary embodiment of the above subembodiment, X1 is no greater than 2^{K1}.

In one subsidiary embodiment of the above subembodiment, X1 is no greater than 2^{K1-1}.

In one embodiment, the first value counts a data volume of each packet in at least the first packet set.

In one embodiment, the first value comprises a data volume of each packet in at least the first packet set.

In one embodiment, a data volume of each packet in at least the first packet set is used to determine the first value.

In one embodiment, the first value is indicative only of a data volume of the first packet set.

In one embodiment, the first value is equal to the size of the first packet set.

In one embodiment, the first value indicates a data volume of P1 first-type packet set(s), the first packet set being one of the P1 first-type packet set(s).

In one embodiment, the P1 is not greater than P_max.

In one embodiment, the P_max is predefined.

In one embodiment, the P_max is of a fixed size.

In one embodiment, the P_max is variable.

In one embodiment, the P_max is pre-configured.

In one embodiment, the P_max is configured via an RRC message.

In one embodiment, the first value is an index, the first value indicating that the size of the first packet set is not smaller than a first threshold and not greater than a second threshold.

In one embodiment, the first value is an index, the first value indicating that the size of the first packet set is smaller than a first threshold.

In one embodiment, the first value is an index, the first value indicating that the size of the first packet set is greater than a second threshold.

In one embodiment, the first value is an index, the first value indicating a size interval to which the size of the first packet set belongs.

In one embodiment, the first value is determined by looking up a first table based on the size of the first packet set.

In one embodiment, the first table includes (2^{K1} - X1) indexes, and (2^{K1} - X1) indexes out of the (2^{K1} - X1) indexes correspond to a range of (2^{K1} - X1) data volumes, respectively.

In one subembodiment, the index 0 corresponds to a data volume equal to 0.

In one subembodiment, the index 1 corresponds to a data volume that is greater than 0 and not greater than Y_1.

In one subembodiment, the index 2 corresponds to a data volume that is greater than Y_1 and not greater than Y_2.

And so on ......

In one subembodiment, the index i corresponds to a data volume that is greater than Y_( i-1) and not greater than Y_i.

And so on ......

In one subembodiment, the index (2^{K1} - X1 - 1) corresponds to a data volume that is greater than Y_(2^{K1} - X1 - 2) and not greater than Y_(2^{K1} - X1 - 1).

In one subembodiment, the index (2^{K1} - X1) corresponds to a data volume that is greater than Y_(2^{K1} - X1 - 1).

In one subembodiment, an index corresponding to the range of data volumes to which the data volume of at least the first packet set belongs is the first value.

In one subembodiment, the Y_1...the Y_j...the Y_(2^{K1} - X1 - 1) are predefined.

In one subembodiment, the Y_1...the Y_j...the Y_(2 ^{K1} - X1 - 1) are sequentially increasing.

In one embodiment, the first table is table 6.1.3.1-1 of Section 6.1.3.1 of 3GPP TS 38.321.

In one subembodiment, an index corresponding to the range of data volumes to which at least the data volume of the first packet set belongs is the first value.

In one embodiment, the first table is table 6.1.3.1-2 of Section 6.1.3.1 of 3GPP TS 38.321.

In one embodiment, the first table is not any of table 6.1.3.1-1 or table 6.1.3.1-2 of Section 6.1.3.1 of 3GPP TS 38.321.

In one subembodiment, an index corresponding to the range of data volumes to which at least the data volume of the first packet set belongs is the first value.

In one embodiment, the first node generates all bits in all packets included in the first packet set.

In one embodiment, the first node forwards all packets in the first packet set generated by other nodes.

In one embodiment, the first node forwards all or some of the packets in the first packet set generated by other nodes.

In one embodiment, the first packet set comprises one or more packets.

In one embodiment, the first packet set includes a finite number of packets.

In one embodiment, the first packet set includes at least one packet.

In one embodiment, the first packet set includes at least two packets.

In one embodiment, the first packet set is a set of packets.

In one embodiment, there exists dependency between packets in one packet set.

In one embodiment, the statement that there exists dependency between packets in one packet set comprises: there being dependency between any two packets in one packet set.

In one embodiment, the statement that there exists dependency between packets in one packet set comprises: any packet in the one packet set being dependent on at least one packet in the one packet set other than the any packet.

In one embodiment, the statement that there exists dependency between packets in one packet set comprises: the decoding of any packet in the one packet set being dependent on at least one packet in the one packet set other than the any packet.

In one embodiment, the statement that there exists dependency between packets in one packet set comprises: a picture of any packet in the one packet set being dependent on at least one packet in the one packet set other than the any packet.

In one embodiment, the statement that there exists dependency between packets in one packet set comprises: the QoS of any packet in the one packet set being dependent on at least one packet in the one packet set other than the any packet.

In one embodiment, the statement that there exists dependency between packets in one packet set comprises: all packets in the one packet set being used to build the same picture.

In one embodiment, the statement that there exists dependency between packets in one packet set comprises: all packets in the one packet set belonging to the same QoS flow.

In one embodiment, the statement that there exists dependency between packets in one packet set comprises: there existing delay requirements for all packets in the one packet set.

In one embodiment, the statement that there exists dependency between packets in one packet set comprises: a delay budget for all packets in the one packet set being incapable of exceeding a threshold.

In one embodiment, each packet in the first packet set is an Uplink packet.

In one embodiment, each packet in the first packet set is a backhaul link packet.

In one embodiment, each packet in the first packet set is a sidelink packet.

In the above embodiment, at least one packet in the first packet set is a buffered packet
In the above embodiment, each packet in the first packet set is a buffered packet.

In the above embodiment, at least one packet in the first packet set is a packet that is anticipated.

In the above embodiment, each packet in the first packet set is a packet that is anticipated.

In one embodiment, the first packet set is one of packet types in a first set of candidate packet types.

In one subembodiment, one of the packet types in the first set of candidate packet types is a Packet Data Convergence Protocol (PDCP) Service Data Unit (SDU).

In one subembodiment, one of the packet types in the first set of candidate packet types is a PDCP Data PDU.

In one subembodiment, one of the packet types in the first set of candidate packet types is a PDCP Control PDU.

In one subembodiment, one of the packet types in the first set of candidate packet types is a PDCP SDU to be retransmitted for an Acknowledged Mode (AM) DRB.

In one subembodiment, one of the packet types in the first set of candidate packet types is a PDCP Data PDU to be retransmitted for an AM DRB.

In one subembodiment, one of the packet types in the first set of candidate packet types is an RLC SDU.

In one subembodiment, one of the packet types in the first set of candidate packet types is an RLC SDU segment.

In one subembodiment, one of the packet types in the first set of candidate packet types is an RLC data PDU to be initially transmitted.

In one subembodiment, one of the packet types in the first set of candidate packet types is an RLC data PDU to be retransmitted for an RLC AM.

In one subembodiment, the packet types in the first set of candidate packet types include at least one of a PDCP SDU or a PDCP Data PDU or a PDCP Control PDU or a PDCP SDU to be retransmitted for an AM DRB or a PDCP Data PDU to be retransmitted for an AM DRB or an RLC SDU or an RLC SDU segment or an RLC data PDU to be initially transmitted or an RLC data PDU to be retransmitted for an RLC AM.

In one embodiment, all packets in the first packet set belong to the same LCG.

In one embodiment, there are two packets in the first packet set belonging to different LCGs.

In one embodiment, the at least one packet in the first packet set is(are) allowed to belong to different LCGs.

In one embodiment, at least partial bits in one packet in the first packet set are generated by an XR server.

In one embodiment, at least partial bits in one packet in the first packet set are generated by an Edge server.

In one embodiment, at least partial bits in one packet in the first packet set are generated by a core network device.

In one embodiment, at least partial bits in one packet in the first packet set are generated by an access network device.

In one embodiment, one packet in the first packet set is a slice.

In one embodiment, one packet in the first packet set is a PDU.

In one embodiment, one packet in the first packet set is the payload of a PDU.

In one embodiment, one packet in the first packet set is a PDU of a Uu interface.

In one embodiment, one packet in the first packet set is a PDU of a PC5 interface.

In one embodiment, one packet in the first packet set is a PDU of an Xn interface.

In one embodiment, one packet in the first packet set is a PDU in sidelink.

In one embodiment, one packet in the first packet set is a PDU above a Service Data Adaptation Protocol (SDAP) layer.

In one embodiment, one packet in the first packet set is a PDU above the MAC sublayer.

In one embodiment, one packet in the first packet set is an application layer PDU.

In one embodiment, one packet in the first packet set is a non-access stratum PDU.

In one embodiment, one packet in the first packet set is an RLC PDU.

In one embodiment, one packet in the first packet set is an RLC data PDU to be initially transmitted.

In one embodiment, one packet in the first packet set is an RLC data PDU to be retransmitted for an RLC AM.

In one embodiment, one packet in the first packet set is a PDCP PDU.

In one embodiment, one packet in the first packet set is a PDCP Data PDU.

In one embodiment, one packet in the first packet set is a PDCP Data PDU to be retransmitted for an AM DRB.

In one embodiment, one packet in the first packet set is a PDCP Control PDU.

In one embodiment, one packet in the first packet set is an SDAP PDU.

In one embodiment, one packet in the first packet set is an Internet Protocol (IP) packet.

In one embodiment, one packet in the first packet set is the payload of an IP packet.

In one embodiment, one packet in the first packet set is an IP PDU.

In one embodiment, one packet in the first packet set is an SDU.

In one embodiment, one packet in the first packet set is the payload of an SDU.

In one embodiment, one packet in the first packet set is an SDU of a Uu interface.

In one embodiment, one packet in the first packet set is an SDU of a PC5 interface.

In one embodiment, one packet in the first packet set is an SDU of an Xn interface.

In one embodiment, one packet in the first packet set is an SDU in sidelink.

In one embodiment, one packet in the first packet set is an SDU above the SDAP layer.

In one embodiment, one packet in the first packet set is an SDU above the MAC sublayer.

In one embodiment, one packet in the first packet set is an application layer SDU.

In one embodiment, one packet in the first packet set is a non-access stratum SDU.

In one embodiment, one packet in the first packet set is an RLC SDU.

In one embodiment, one packet in the first packet set is an RLC SDU segment.

In one embodiment, one packet in the first packet set is a PDCP SDU.

In one embodiment, one packet in the first packet set is a PDCP SDU to be retransmitted for an AM DRB.

In one embodiment, one packet in the first packet set is an SDAP SDU.

In one embodiment, one packet in the first packet set is a packet to be retransmitted.

In one embodiment, one packet in the first packet set is generated by a user-plane protocol entity.

In one embodiment, one packet in the first packet set comprises only user-plane data.

In one embodiment, one packet in the first packet set uses a DRB.

In one embodiment, one packet in the first packet set is a PDU of the first protocol layer.

In one embodiment, one packet in the first packet set is packetized at the first protocol layer.

In one embodiment, SDUs included in one packet in the first packet set are encapsulated at the first protocol layer as PDUs of the first protocol layer.

In one embodiment, SDUs of one packet in the first packet set are encapsulated and added to a protocol header at the first protocol layer.

In one embodiment, all bits of one packet in the first packet set are generated at the first protocol layer.

In one embodiment, at least a packet header of one packet in the first packet set is generated at the first protocol layer.

In one embodiment, one packet in the first packet set is transmitted via a DRB.

In one embodiment, one packet in the first packet set is mapped to a DRB.

In one embodiment, at least part of bits in one packet in the first packet set are transmitted using a DRB.

In one embodiment, all of the bits in one packet in the first packet set are transmitted via a DRB.

In one embodiment, an SDU of one packet in the first packet set is a PDCP PDU.

In one embodiment, transmission resources occupied by one packet in the first packet set comprise a DRB.

In one embodiment, transmission resources occupied by one packet in the first packet set are associated with a DRB.

In one embodiment, the one field of a packet header of one packet in the first packet set is a D/C field.

In one embodiment, one field of a packet header of one packet in the first packet set indicates that the type of the any packet in the first packet set is data.

In one embodiment, each packet in the first packet set is generated by a PDCP sublayer.

In one embodiment, each packet in the first packet set is generated by a PDCP sublayer or an RLC sublayer.

In one embodiment, each packet in the first packet set is generated by an SDAP layer.

In one embodiment, each packet in the first packet set is generated by an IP layer.

In one embodiment, each packet in the first packet set is generated by a transmission layer.

In one embodiment, each packet in the first packet set is generated by an application layer.

In one embodiment, each packet in the first packet set is generated by a transmission network layer.

In one embodiment, each packet in the first packet set is generated by a network layer.

In one embodiment, each packet in the first packet set belongs to one of a PDCP sublayer or an RLC sublayer.

In one embodiment, each packet in the first packet set belongs to a PDCP sublayer.

In one embodiment, each packet in the first packet set belongs to an RLC sublayer.

In one embodiment, an SDU of each packet in the first packet set is transmitted via a DRB.

In one embodiment, each packet in the first packet set is transmitted via a DRB.

In one embodiment, each packet in the first packet set is mapped to a DRB.

In one embodiment, any packet in the first packet set does not include control plane PDUs.

In one embodiment, any packet in the first packet set does not include control signaling.

In one embodiment, any packet in the first packet set does not include RRC signaling.

In one embodiment, any packet in the first packet set is not a control PDU.

In one embodiment, an SDU of any packet in the first packet set is not transmitted via an SRB.

In one embodiment, any two packets in the first packet set have a relation of dependency.

In one embodiment, any two packets in the first packet set are mapped to a same logical channel.

In one embodiment, any two packets in the first packet set are mapped to a same LCG.

In one embodiment, any two packets in the first packet set belong to the same service.

In one embodiment, any two packets in the first packet set belong to the same PDU session.

In one embodiment, any two packets in the first packet set are of the same type.

In one embodiment, any two packets in the first packet set are generated by the same protocol entity.

In one embodiment, the DRBs respectively used by any two packets in the first packet set have an association relationship.

In one embodiment, between any two packets in the first packet set, one packet uses a DRB that is a MCG DRB and the other uses a DRB that is an SCG DRB.

In one embodiment, the DRBs used by any two packets in the first packet set are both MCG DRBs.

In one embodiment, the DRBs used by any two packets in the first packet set are both split DRBs.

In one embodiment, any two packets in the first packet set uses a same DRB.

In one embodiment, any two packets in the first packet set are associated with the same QoS flow.

In one embodiment, any two packets in the first packet set have different packet headers.

In one embodiment, any two packets in the first packet set have different Sequence numbers.

In one embodiment, any two packets in the first packet set occupy different logical channels.

In one embodiment, any two packets in the first packet set occupy the same logical channel.

In one embodiment, any two packets in the first packet set are processed by a same MAC entity.

In one embodiment, any two packets in the first packet set are processed by different MAC entities.

In one embodiment, any two packets in the first packet set are different at least in part of bits.

In one embodiment, any two packets in the first packet set have different sizes.

In one embodiment, any two packets in the first packet set have different SDUs.

In one embodiment, any two packets in the first packet set are generated by different protocol entities.

In one embodiment, any two packets in the first packet set have different protocol headers or subheaders.

In one embodiment, the protocol headers of any two packets in the first packet set are different in at least one field.

In one embodiment, any two packets in the first packet set are both user-plane PDUs.

In one embodiment, any two packets in the first packet set are generated by the user-plane protocol layer.

In one embodiment, there are two packets in the first packet set being associated with different QoS flows.

In one embodiment, there are two packets in the first packet set having the same packet header.

In one embodiment, there are two packets in the first packet set having the same sequence number.

In one embodiment, there are two packets in the first packet set having the same size.

In one embodiment, there are two packets in the first packet set being mapped to different logical channels.

In one embodiment, there are two packets in the first packet set being mapped to different LCGs.

In one embodiment, there are two packets in the first packet set being of different types.

In one embodiment, there are two packets in the first packet set being generated by different protocol entities.

In one embodiment, there are two packets in the first packet set using different DRBs.

In one embodiment, there are two packets in the first packet set using different DRB IDs.

In one embodiment, there are two packets in the first packet set, of which one packet uses a DRB without being relayed and the other uses a DRB that is relayed

In one embodiment, there are two packets in the first packet set being generated by different protocol entities.

In one embodiment, the protocol entity includes a PDCP entity.

In one embodiment, the protocol entity includes an RLC entity.

In one embodiment, the first protocol layer is a higher layer of the protocol layer other than the first protocol layer.

In one embodiment, the first protocol layer is a higher layer of the protocol layer other than the first protocol layer.

In one embodiment, a peer protocol layer of the first protocol layer and a peer protocol layer of the protocol layer other than the first protocol layer are in a same network node.

In one embodiment, a peer protocol layer of the first protocol layer and a peer protocol layer of the protocol layer other than the first protocol layer are not in a same network node.

In one embodiment, the first protocol layer is a PDCP sublayer.

In one embodiment, the first protocol layer is an SDAP layer.

In one embodiment, the first protocol layer is a Transmission Control Protocol (TCP) or a User Datagram Protocol (UDP) or a Real-time Transport Protocol (RTP) layer.

In one embodiment, the first protocol layer is an IP layer.

In one embodiment, the first protocol layer is a Transport Network Layer (TNL).

In one embodiment, the first protocol layer is an RLC sublayer.

In one embodiment, the first protocol layer is a Non-Access Stratum (NAS).

In one embodiment, the first protocol layer is an application layer.

In one embodiment, the protocol layer other than the first protocol layer is a PDCP sublayer.

In one embodiment, the protocol layer other than the first protocol layer is an SDAP layer.

In one embodiment, the protocol layer other than the first protocol layer is an IP layer.

In one embodiment, the protocol layer other than the first protocol layer is a TNL layer.

In one embodiment, the protocol layer other than the first protocol layer is an RLC sublayer.

In one embodiment, the protocol layer other than the first protocol layer is a TCP, UDP or RTP layer.

In one embodiment, the protocol layer other than the first protocol layer is a Non-Access-Stratum (NAS).

In one embodiment, the protocol layer other than the first protocol layer is an application layer.

In one embodiment, the first protocol layer is not an RRC sublayer.

In one embodiment, the first protocol layer is not a MAC sublayer.

In one embodiment, the first identifier indicates a first object.

In one embodiment, the first identifier is an index of the first object.

In one embodiment, the first identifier is an identifier for the first object.

In one embodiment, the first identifier is used to indicate a first object, the first object being not an LCG ID.

In one embodiment, the first identifier is associated to at least one LCG.

In one embodiment, the first identifier is associated to one or more LCGs.

In one embodiment, the first identifier is associated to multiple LCGs.

In one embodiment, the first identifier is associated to one LCG.

In one embodiment, the first identifier is associated to one DRB.

In one embodiment, the first identifier is an integer.

In one embodiment, the first identifier is a time interval.

In one embodiment, the first identifier is a display identifier.

In one embodiment, the first identifier is used to identify a set of PDUs.

In one embodiment, the first identifier is one or more PDCP SNs.

In one embodiment, the first identifier is one or more PDCP COUNTs.

In one embodiment, the first identifier is a QoS flow ID.

In one embodiment, the first identifier is a PDU session ID.

In one embodiment, the first identifier is a PDU set ID.

In one embodiment, the first identifier is used to determine a PDU set.

In one embodiment, the first identifier is configured at the PDCP sublayer.

In one embodiment, the first identifier is configured at a higher layer of the PDCP sublayer.

In one embodiment, the first identifier is a DRB ID.

In one embodiment, the first identifier is used to indicate a DRB carrying the first packet set.

In one embodiment, the first identifier is used to indicate that the first value is targeted for an object indicated by the first identifier.

In one embodiment, the first object is an object indexed by the first identifier.

In one embodiment, the object is a DRB.

In one embodiment, the object is a PDU set.

In one embodiment, the object is a PDCP set.

In one embodiment, the object is a QoS flow.

In one embodiment, the object is associated to a group of packets.

In one embodiment, the object is associated to at least one group of packets.

In one embodiment, the object is associated to a group of packet sets.

In one embodiment, the object is associated to at least one group of packet sets.

In one embodiment, the first packet set is associated to the first object.

In one embodiment, each packet in the first packet set corresponds to the first identifier.

In one embodiment, each packet in the first packet set is configured with the first identifier.

In one embodiment, each packet in the first packet set is indicated the first identifier.

In one embodiment, each packet in the first packet set is labeled with the first identifier.

In one embodiment, whether a packet belongs to the first packet set is related to the first identifier.

In one embodiment, whether a packet belongs to the first packet set is independent of an LCG ID.

In one embodiment, the first identifier is not an LCG ID.

In one embodiment, the first identifier is not configured via a logicalChannelGroup.

In one embodiment, the first identifier is not used to indicate an LCG.

In one embodiment, the first value is related to the first packet set, and, the first value is not related to whether the first packet set belongs to the same LCG.

In one embodiment, the first node is not configured with PDCP Duplication.

In one embodiment, the first node is not configured with Carrier Aggregation (CA) Duplication.

In one embodiment, the first node is configured with PDCP Duplication.

In one embodiment, the first node is configured with CA Duplication.

### Embodiment 2

Embodiment 2 illustrates a schematic diagram of a network architecture according to one embodiment of the present application, as shown in FIG. 2. FIG. 2 illustrates a network architecture 200 of 5G New Radio (NR)/Long-Term Evolution (LTE)/Long-Term Evolution Advanced (LTE-A) systems. The 5G NR/LTE/LTE-A network architecture 200 may be called a 5G System/ Evolved Packet System (5GS/EPS) 200 or other suitable terminology. The 5GS/EPS 200 may comprise UE(s) 201, a RAN 202, a 5G Core Network/Evolved Packet Core (5GC/EPC) 210, a Home Subscriber Server/ Unified Data Management(HSS/UDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will find it easy to understand that various concepts presented throughout the present application can be extended to networks providing circuit switching services or other cellular networks. The RAN comprises a node 203 and another node 204. The node 203 provides UE 201 oriented user plane and control plane terminations. The node 203 can be connected to other node 204 via an Xn interface (like backhaul)/X2 interface. The node 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The node 203 provides an access point of the 5GC/EPC 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The node 203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/AMFs/SMFs 214, a Service Gateway (S-GW)/User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212. The S-GW/UPF 212 is connected to the P-GW/UPF 213. The P-GW 213 provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application.

In one embodiment, the UE 201 is a UE.

In one embodiment, the UE 201 is a BaseStation (BS).

In one embodiment, the UE 201 is a relay device.

In one embodiment, the node 203 corresponds to the second node in the present application.

In one embodiment, the node 203 is a base station.

In one embodiment, the node 203 is a UE.

In one embodiment, the node 203 is a relay device.

In one embodiment, the node 203 is a Gateway.

In one embodiment, the UE supports transmissions in Non-Terrestrial Network (NTN).

In one embodiment, the UE supports transmissions in Terrestrial Network (TN).

In one embodiment, the UE supports transmissions in large-delay-difference networks.

In one embodiment, the UE supports Dual Connection (DC) transmissions.

In one embodiment, the UE comprises an aircraft.

In one embodiment, the UE comprises a vehicle-mounted terminal.

In one embodiment, the UE comprises a vessel.

In one embodiment, the UE comprises an Internet-of- Things (IoT) terminal.

In one embodiment, the UE comprises an Industrial IoT (IIoT) terminal.

In one embodiment, the UE comprises a piece of equipment supporting transmissions with low delay and high reliability.

In one embodiment, the UE comprises test equipment.

In one embodiment, the UE comprises a signaling test instrument.

In one embodiment, the base station comprises a Base Transceiver Station (BTS).

In one embodiment, the base station comprises a NodeB (NB).

In one embodiment, the base station comprises a gNB.

In one embodiment, the base station comprises an eNB.

In one embodiment, the base station comprises an ng-eNB.

In one embodiment, the base station comprises an en-gNB.

In one embodiment, the base station supports transmissions in NTN.

In one embodiment, the base station supports transmissions in large-delay-difference networks.

In one embodiment, the base station supports transmissions in TN.

In one embodiment, the base station comprises a MacroCellular base station.

In one embodiment, the base station comprises a Micro Cell base station.

In one embodiment, the base station comprises a Pico Cell base station.

In one embodiment, the base station comprises a Femtocell.

In one embodiment, the base station comprises a base station device supporting large time-delay difference.

In one embodiment, the base station comprises a flight platform.

In one embodiment, the base station comprises satellite equipment.

In one embodiment, the base station comprises a Transmitter Receiver Point (TRP).

In one embodiment, the base station comprises a Centralized Unit (CU).

In one embodiment, the base station comprises a Distributed Unit (DU).

In one embodiment, the base station comprises test equipment.

In one embodiment, the base station comprises a signaling test instrument.

In one embodiment, the base station comprises an Integrated Access and Backhaul-node (IAB-node).

In one embodiment, the base station comprises an IAB-donor.

In one embodiment, the base station comprises an IAB-donor-CU.

In one embodiment, the base station comprises an IAB-donor-DU.

In one embodiment, the base station comprises an IAB-DU.

In one embodiment, the base station comprises an IAB-MT.

In one embodiment, the relay device comprises a relay.

In one embodiment, the relay device comprises a L3 relay.

In one embodiment, the relay device comprises a L2 relay.

In one embodiment, the relay device comprises a Router.

In one embodiment, the relay device comprises an Exchanger.

In one embodiment, the relay device comprises a UE.

In one embodiment, the relay device comprises a base station.

### Embodiment 3

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 is represented by three layers, which are layer1, layer2 and layer3. The layer 1 (L1) is the lowest layer which performs signal processing functions of various PHY layers. The L1 is called PHY 301 in the present application. The layer 2 (L2) 305 is above the PHY 301, and is in charge of the link between the UE and the gNB via the PHY 301. The L2 305 comprises a Medium Access Control (MAC) sublayer 302, a Radio Link Control (RLC) sublayer 303 and a Packet Data Convergence Protocol (PDCP) sublayer 304. The PDCP sublayer 304 provides multiplexing among variable radio bearers and logical channels. The PDCP sublayer 304 provides security by encrypting a packet and provides support for inter-cell handover. The RLC sublayer 303 provides segmentation and reassembling of a higher-layer packet, retransmission of a lost packet, and reordering of a packet so as to compensate the disordered receiving caused by Hybrid Automatic Repeat Request (HARQ). The MAC sublayer 302 provides multiplexing between a logical channel and a transport channel. The MAC sublayer 302 is also responsible for allocating various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling. The radio protocol architecture in the user plane 350 comprises the L1 layer and the L2 layer. In the user plane 350, the radio protocol architecture used for a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics.

In one embodiment, the radio protocol architecture in FIG. 3 is applicable to the first node in the present application.

In one embodiment, the radio protocol architecture in FIG. 3 is applicable to the second node in the present application.

In one embodiment, the first signaling in the present application is generated by the MAC302 or the MAC352.

### Embodiment 4

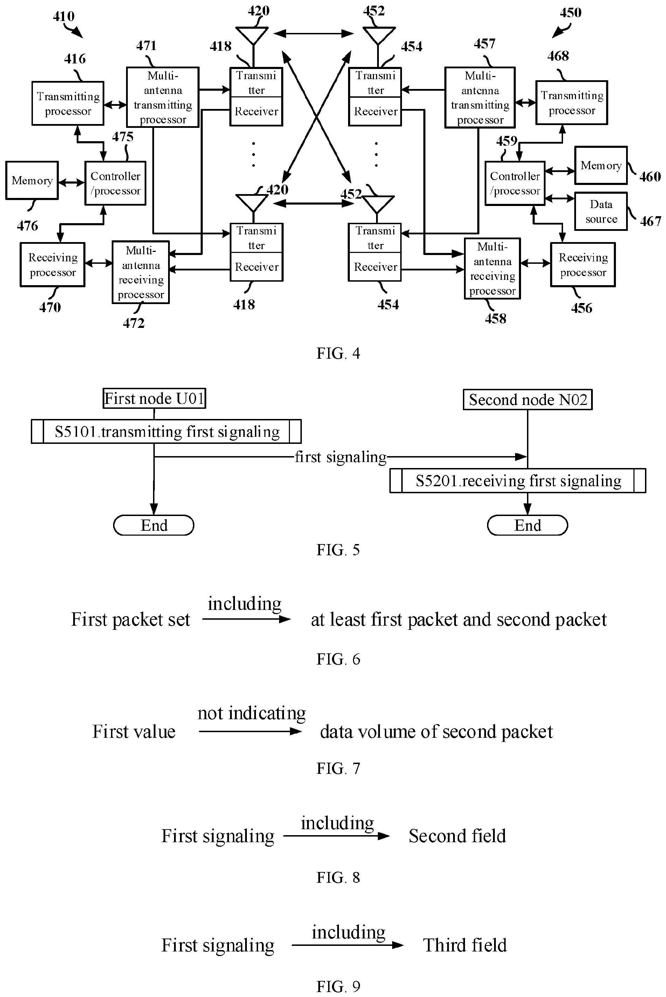

Embodiment 4 illustrates a schematic diagram of a first communication device and a second communication device according to the present application, as shown in FIG. 4. FIG. 4 is a block diagram of a first communication device 450 and a second communication device 410 in communication with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

In a transmission from the second communication device 410 to the first communication device 450, at the second communication device 410, a higher layer packet from a core network is provided to the controller/processor 475. The controller/processor 475 provides functions of the L2 layer. In the transmission from the second communication device 410 to the first communication device 450, the controller/processor 475 provides header compression, encryption, packet segmentation and reordering, and multiplexing between a logical channel and a transport channel, and radio resource allocation of the first communication device 450 based on various priorities. The controller/processor 475 is also in charge of a retransmission of a lost packet and a signaling to the first communication device 450. The transmitting processor 416 and the multi-antenna transmitting processor 471 perform various signal processing functions used for the L1 layer (i.e., PHY). The transmitting processor 416 performs coding and interleaving so as to ensure a Forward Error Correction (FEC) at the second communication device 410 side and the mapping of signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the second communication device 410 to the first communication device 450, at the first communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts the processed baseband multicarrier symbol stream from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any first communication device 450-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted by the second communication device 410 on the physical channel. Next, the higher-layer data and control signal are provided to the controller/processor 459. The controller/processor 459 provides functions of the L2 layer. The controller/processor 459 can be associated with the memory 460 that stores program code and data; the memory 460 may be called a computer readable medium. In the transmission from the second communication device 410 to the second communication device 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the first communication device 450 to the second communication device 410, at the first communication device 450, the data source 467 is configured to provide a higher-layer packet to the controller/processor 459. The data source 467 represents all protocol layers above the L2 layer. Similar to a transmitting function of the second communication device 410 described in the transmission from the second communication node 410 to the first communication node 450, the controller/processor 459 performs header compression, encryption, packet segmentation and reordering, and multiplexing between a logical channel and a transport channel based on radio resource allocation so as to provide the L2 layer functions used for the user plane and the control plane. The controller/processor 459 is also responsible for a retransmission of a lost packet, and a signaling to the second communication device 410. The transmitting processor 468 performs modulation and mapping, as well as channel coding, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 firstly converts a baseband symbol stream provided by the multi-antenna transmitting processor 457 into a radio frequency symbol stream, and then provides the radio frequency symbol stream to the antenna 452.

In a transmission from the first communication device 450 to the second communication device 410, the function of the second communication device 410 is similar to the receiving function of the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data; the memory 476 may be called a computer readable medium. In the transmission from the first communication device 450 to the second communication device 410, the controller/processor 475 provides de-multiplexing between a transport channel and a logical channel, packet reassembling, decrypting, header decompression, control signal processing so as to recover a higher-layer packet from the first communication device (UE) 450. The higher-layer packet coming from the controller/processor 475 may be provided to the core network.

In one embodiment, the first communication device 450 comprises at least one processor and at least one memory. The at least one memory comprises computer program codes; the at least one memory and the computer program codes are configured to be used in collaboration with the at least one processor. The first communication device 450 at least transmits a first signaling, the first signaling including a first field, the first field including a first value, the first value indicating a data volume of at least a first packet set; herein, the first packet set includes at least one packet; each packet in the first packet set is associated to a first identifier; the first identifier is an identifier other than a LCG ID.

In one embodiment, the first communication device 450 comprises a memory that stores a computer readable instruction program. The computer readable instruction program generates actions when executed by at least one processor. The actions include: transmitting a first signaling, the first signaling including a first field, the first field including a first value, the first value indicating a data volume of at least a first packet set; herein, the first packet set includes at least one packet; each packet in the first packet set is associated to a first identifier; the first identifier is an identifier other than a LCG ID.

In one embodiment, the second communication device 410 comprises at least one processor and at least one memory. The at least one memory comprises computer program codes; the at least one memory and the computer program codes are configured to be used in collaboration with the at least one processor. The second communication device 410 at least receives a first signaling, the first signaling including a first field, the first field including a first value, the first value indicating a data volume of at least a first packet set; herein, the first packet set includes at least one packet; each packet in the first packet set is associated to a first identifier; the first identifier is an identifier other than a LCG ID.

In one embodiment, the second communication device 410 comprises a memory that stores a computer readable instruction program. The computer readable instruction program generates actions when executed by at least one processor. The actions include: receiving a first signaling, the first signaling including a first field, the first field including a first value, the first value indicating a data volume of at least a first packet set; herein, the first packet set includes at least one packet; each packet in the first packet set is associated to a first identifier; the first identifier is an identifier other than a LCG ID.

In one embodiment, at least one of the antenna 452, the transmitter 454, the transmitting processor 468 or the controller/processor 459 is used for transmitting a first signaling.

In one embodiment, at least one of the antenna 420, the receiver 418, the receiving processor 470 or the controller/processor 475 is used for receiving a first signaling.

In one embodiment, the first communication device 450 corresponds to the first node in the present application.

In one embodiment, the second communication device 410 corresponds to the second node in the present application.

In one embodiment, the first communication device 450 is a UE.

In one embodiment, the first communication device 450 is a base station (gNB/eNB/ng-eNB).

In one embodiment, the first communication device 450 is a relay device.

In one embodiment, the second communication device 410 is a UE.

In one embodiment, the second communication device 410 is a base station (gNB/eNB/ng-eNB).

In one embodiment, the second communication device 410 is a relay device.

### Embodiment 5

Embodiment 5 illustrates a flowchart of radio signal transmission according to one embodiment of the present application, as shown in FIG. 5. It should be particularly noted that the sequence illustrated herein does not set any limit to the signal transmission order or implementation order in the present application.

The **first node U01** transmits a first signaling in step S5101, the first signaling including a first field, the first field including a first value, the first value indicating a data volume of at least a first packet set.

The **second node N02** receives the first signaling in step S5201.

In Embodiment 5, the first packet set includes at least one packet; each packet in the first packet set is associated to a first identifier; the first identifier is an identifier other than a LCG ID.

In one embodiment, the first node U01 is a UE.

In one embodiment, the first node U01 is a base station.

In one embodiment, the first node U01 is a relay device.

In one embodiment, the second node N02 is a base station.

In one embodiment, the second node N02 is a UE.

In one embodiment, the second node N02 is a relay device.

In one embodiment, the first node U01 is a UE, and the second node N02 is a base station.

In one embodiment, the first node U01 is a UE, and the second node N02 is a relay device.

In one embodiment, the first node U01 is a UE, and the second node N02 is a UE.

In one embodiment, the first node U01 is a base station, and the second node N02 is a base station.

In one embodiment, the first node U01 is a relay device, and the second node N02 is a base station.

In one embodiment, the first node U01 and the second node N02 are connected via a uu interface.

In one embodiment, the first node U01 and the second node N02 are connected via an Xn interface.

In one embodiment, the first node U01 and the second node N02 are connected via an X2 interface.

In one embodiment, the first node U01 and the second node N02 are connected via a PC5 interface.

In one embodiment, the first node U01 and the second node N02 are connected via an air interface.

In one embodiment, as a response to a first report being triggered, the first signaling is generated.

In one embodiment, the first report is deleted as a response to a MAC PDU comprising the first signaling being transmitted.

In one embodiment, the first report comprises a data volume report for at least one object.

In one embodiment, the first report comprises a BSR.

### Embodiment 6

Embodiment 6 illustrates a schematic diagram of a first packet set including at least a first packet and a second packet according to one embodiment of the present application, as shown in FIG. 6.

In Embodiment 6, the first packet set includes at least a first packet and a second packet, the first packet being associated to a first LCG and the second packet being associated to a second LCG, the first LCG being identified by the first LCG ID, and the second LCG being identified by the second LCG ID, the first LCG ID being unequal to the second LCG ID.

In one embodiment, the first signaling includes a first field, the first field including a first value, the first value indicating a data volume of at least a first packet set; the first packet set includes at least a first packet and a second packet, the first packet being associated to a first LCG and the second packet being associated to a second LCG, the first LCG being identified by the first LCG ID, and the second LCG being identified by the second LCG ID, the first LCG ID being unequal to the second LCG ID; each packet in the first packet set is associated to a first identifier; the first identifier is an identifier other than a LCG ID.

In one embodiment, the first packet and the second packet are associated to the first identifier.

In one embodiment, the first packet set includes M1 packets, the M1 packets being associated to at least two LCGs; each of the at least two LCGs is identified by an LCG ID, and any two LCGs of the at least two LCGs have unequal LCG IDs; the M1 being an integer greater than 1; the first packet is one of the M1 packets, and, the second packet is one of the M1 packets.

In one embodiment, the M1 packets in the first packet set are associated to the first identifier.

In one embodiment, the first value indicates a data volume of each packet that is associated to the first LCG.

In one embodiment, the first value is not indicative of a data volume of at least one packet being associated to the first LCG.

In one embodiment, the first value indicates a data volume of each packet that is associated to the second LCG.

In one embodiment, the first value is not indicative of a data volume of at least one packet being associated to the second LCG.

In one embodiment, the first value indicates a data volume of each packet that is associated to the first LCG, and the first value indicates a data volume of each packet that is associated to the second LCG.

In one embodiment, the first value indicates a data volume of each packet that is associated to the first LCG, and the first value is not indicative of a data volume of at least one packet being associated to the second LCG.

In one embodiment, the first value is not indicative of a data volume of at least one packet being associated to the first LCG, and the first value indicates a data volume of each packet that is associated to the second LCG.

In one embodiment, the first value is not indicative of a data volume of at least one packet being associated to the first LCG, and the first value is not indicative of a data volume of at least one packet being associated to the second LCG.

In one embodiment, the first value indicates a data volume of at least the first packet and the second packet.

In one embodiment, the first value counts data volumes of at least the first packet and the second packet.

In one embodiment, the first value includes data volumes of at least the first packet and the second packet.

In one embodiment, at least a data volume of the first packet set and a data volume of the second packet are used to determine the first value.

In one embodiment, the first value indicates a data volume of packets being associated to logical channels for at least two LCGs.

In one embodiment, the first value counts a data volume of packets being associated to logical channels for at least two LCGs.

In one embodiment, the first value includes a data volume of packets being associated to logical channels for at least two LCGs.

In one embodiment, a data volume of packets being associated to logical channels for at least two LCGs is used to determine the first value.

In one embodiment, the sizes of the first LCG ID and the second LCG ID are used to determine that the first value indicates data volumes of at least the first packet and the second packet.

In one embodiment, the first LCG and the second LCG each being an LCG in the first candidate LCG set is used to determine that the first value indicates data volumes of at least the first packet and the second packet.

In one embodiment, the size of an LCG ID associated with each packet in the first packet set is used to determine that the first value indicates a data volume of at least the first packet set.

In one embodiment, whether or not an LCG associated with each packet in the first packet set belongs to the first candidate LCG set is used to determine that the first value indicates a data volume of at least the first packet set.

In one embodiment, the first value indicates that data volumes of at least the first packet and the second packet are independent of the sizes of the first LCG ID and the second LCG ID.

In one embodiment, the first value indicates that a data volume of at least the first packet set is independent of the size of an LCG ID associated with each packet in the first packet set.

In one embodiment, the first value indicates that a data volume of at least the first packet set is independent of whether an LCG associated with each packet in the first packet set belongs to the first candidate LCG set.

In one embodiment, the first LCG and the second LCG are each an LCG in the first LCG set.

In one embodiment, the first LCG set includes all LCGs configured for a first MAC entity of the first node.

In one embodiment, the first MAC entity is a MAC entity for an MCG.

In one embodiment, the first MAC entity is a MAC entity for an SCG.

In one embodiment, each logical channel in each LCG in the first LCG set is associated to the first MAC entity.

In one embodiment, the first LCG and the second LCG are any two different LCGs in the first LCG set, respectively.

In one embodiment, the first LCG is any LCG in the first LCG set, and the second LCG is any LCG other than the first LCG in the first LCG set.

In one embodiment, the first LCG and the second LCG are each an LCG in a first candidate LCG set, the first candidate LCG set being a subset of a first LCG set.

In one subembodiment, each LCG in the first candidate LCG set belongs to the first LCG set.

In one subembodiment, each LCG in the first candidate LCG set is an LCG in the first LCG set.

In one subembodiment, a number of LCGs in the first candidate LCG set is not greater than a number of LCGs in the first LCG set.

In one subembodiment, a number of LCGs in the first candidate LCG set is less than a number of LCGs in the first LCG set.

In one subembodiment, the first LCG set includes at least one LCG that is not part of the first candidate LCG set.

In one subembodiment, the first LCG and the second LCG each being an LCG in the first candidate LCG set is used to determine that the first value is used to indicate data volumes of at least the first packet and the second packet.

In one subembodiment, if the first candidate LCG set is configured or indicated, the first LCG and the second LCG each being an LCG in the first candidate LCG set is used to determine that the first value is used to indicate data volumes of at least the first packet and the second packet.

In one subembodiment, the LCG associated with each packet in the at least first packet set belongs to the first candidate LCG set.

In one subembodiment, the LCG associated with each packet in the at least first packet set does not belong to an LCG other than the first candidate LCG set.

In one subembodiment, the LCGs included in the first candidate LCG set are configured.

In one subembodiment, the LCGs included in the first candidate LCG set are predefined.

In one subembodiment, the LCGs included in the first candidate LCG set are indicated.

In one subembodiment, an RRC message explicitly indicates whether an LCG in the first LCG set belongs to the first candidate LCG set.

In one subembodiment, an RRC message implicitly indicates whether an LCG in the first LCG set belongs to the first candidate LCG set.

In one subembodiment, an LCG ID of each LCG included in the first candidate LCG set is an integer not less than 0 and not greater than a second integer.

In one subsidiary embodiment of the above subembodiment, an LCG with the largest LCG ID in the first LCG set is not part of the first candidate LCG set.

In one subsidiary embodiment of the above subembodiment, at least the LCGs with LCG IDs equal to the first integer in the first LCG set are not part of the first candidate LCG set.

In one subsidiary embodiment of the above subembodiment, if one LCG in the first LCG set has an LCG ID greater than the second integer, the one LCG does not belong to the first candidate LCG set.

In one subembodiment, an LCG ID of each LCG included in the first candidate LCG set is an integer that is not less than the second integer and not greater than the first integer.

In one subsidiary embodiment of the above subembodiment, at least the LCGs with LCG IDs equal to 0 in the first LCG set are not part of the first candidate LCG set.

In one subsidiary embodiment of the above subembodiment, an LCG with the smallest LCG ID in the first LCG set is not part of the first candidate LCG set.

In one subsidiary embodiment of the above subembodiment, if one LCG in the first LCG set has an LCG ID less than the second integer, the one LCG does not belong to the first candidate LCG set.

In one subembodiment, the second integer is an integer greater than 0 and less than the first integer.

In one subembodiment, the second integer is pre-defined.

In one subembodiment, the second integer is fixed.

In one subembodiment, the second integer is configurable.

In one embodiment, the first candidate LCG set exists.

In one embodiment, the first candidate LCG set does not exist.

In one embodiment, the first candidate LCG ID set is configured or indicated.

In one embodiment, the first candidate LCG ID set is not configured and is not indicated.

In one embodiment, one packet being associated to one LCG comprises: the one packet being mapped to a logical channel, the logical channel belonging to the one LCG.

In one subembodiment, the phrase "the one packet being mapped to a logical channel" comprises: the one packet being delivered to an entity associated with the logical channel, the entity associated with the logical channel including at least one of a PDCP entity or an RCL entity.

In one subembodiment, the phrase "the one packet being mapped to a logical channel" comprises: the one packet is transmitted over the logical channel.

In one subembodiment, the phrase "the one packet being mapped to a logical channel" comprises: the logical channel being used to carry the one packet.

In one subembodiment, the phrase "the one packet being mapped to a logical channel" comprises: the one packet being mapped to one Radio Bearer (RB), the one RB being configured to a logical channel.

In one subembodiment, the phrase "the logical channel belonging to the one LCG" comprises: the logical channel being configured with an LCG ID of the one LCG.

In one subembodiment, the phrase "the logical channel belonging to the one LCG" comprises: the one LCG comprising at least one logical channel, with the logical channel being one of the at least one logical channel.

In one embodiment, one packet being associated to one LCG comprises: a logical channel for carrying the one packet belonging to the one LCG.

In one embodiment, one packet being associated to one LCG comprises: the one LCG comprising at least one logical channel, with a logical channel for carrying the one packet being one of the at least one logical channel.

In one embodiment, an LCG being identified by an LCG ID comprises: the LCG having an LCG ID equal to the one LCG ID.

In one embodiment, an LCG being identified by an LCG ID comprises: the LCG being an LCG indexed by the one LCG ID.

In one embodiment, the above one logical channel is a channel between a MAC sublayer and an RLC sublayer.

In one embodiment, the above one logical channel is above the MAC sublayer.

In one embodiment, the above one logical channel is mapped to a MAC entity.

In one embodiment, the above one logical channel is a control channel.

In one embodiment, the above one logical channel is a traffic channel.

In one embodiment, the above one logical channel is a Broadcast Control Channel (BCCH).

In one embodiment, the above one logical channel is a Paging Control Channel (PCCH).

In one embodiment, the above one logical channel is a Common Control Channel (CCCH).

In one embodiment, the above one logical channel is a Dedicated Control Channel (DCCH).

In one embodiment, the above one logical channel is a Dedicated Traffic Channel (DTCH).

In one embodiment, the above one logical channel is an MBS Control Channel (MCCH).

In one embodiment, the above one logical channel is an MBS Traffic Channel (MTCH).

In one embodiment, the above one logical channel is a Sidelink Broadcast Control Channel (SBCCH).

In one embodiment, the above one logical channel is a Sidelink Control Channel (SCCH).

In one embodiment, the above one logical channel is a Sidelink Traffic Channel (STCH).

In one embodiment, the above one packet is the first packet.

In one embodiment, the above one packet is the second packet.

In one embodiment, the above one LCG is the first LCG.

In one embodiment, the above one LCG is the second LCG.

In one embodiment, the above one LCG ID is an integer.

In one embodiment, the above one LCG ID is a non-negative integer.

In one embodiment, the above one LCG ID is an integer that is not less than 0 and not greater than a first integer.

In one embodiment, the first integer is a maxLCG-ID.

In one embodiment, the first integer is 7.

In one embodiment, an LCG includes at least one logical channel.

In one embodiment, an LCG includes one or more logical channels.

In one embodiment, the logical channels included in an LCG are configurable.

In one embodiment, the logical channels included in an LCG are pre-configured.

In one embodiment, the logical channels included in an LCG are configured via RRC messages.

In one embodiment, the logical channels included in an LCG are of the same type.

In one embodiment, the logical channels included in an LCG are of different types.

In one embodiment, the type of a logical channel is BCCH or PCCH or CCCH or DCCH or DTCH or MCCH or MTCH or SBCCH or SCCH or STCH.

### Embodiment 7

Embodiment 7 illustrates a schematic diagram of a first value not indicating the data volume of a second packet according to one embodiment of the present application, as shown in FIG. 7.

In Embodiment 7, the first packet set includes at least a first packet, the first packet being associated to a first LCG, the first LCG being identified by the first LCG ID; the first value does not indicate a data volume of a second packet; the second packet is associated to the first LCG, and the second packet does not belong to the first packet set.

In one embodiment, the first signaling includes a first field, the first field including a first value, the first value indicating a data volume of at least a first packet set and the first value not indicating a data volume of a second packet; the first packet set includes at least a first packet, the first packet being associated to a first LCG, the first LCG being identified by the first LCG ID; the second packet is associated to the first LCG, and the second packet does not belong to the first packet set; each packet in the first packet set is associated to a first identifier; the first identifier is an identifier other than a LCG ID.

In one embodiment, the sentence "the second packet does not belong to the first packet set" comprises that the second packet is not associated to the first identifier.

In one embodiment, the sentence "the second packet does not belong to the first packet set" comprises that the second packet has no dependency on any of packets in the first packet set.

In one embodiment, the sentence "the second packet does not belong to the first packet set" comprises that a logical channel used for carrying any of packets in the first packet set is not used for carrying the second packet.

In one embodiment, the sentence "the second packet does not belong to the first packet set" comprises that any of packets in the first packet set is transmitted via a DRB and the second packet is transmitted via an SRB.

In one embodiment, the sentence "the second packet does not belong to the first packet set" comprises that any of packets in the first packet set is user data and the second packet is an RRC signaling.

In one embodiment, the sentence "the second packet does not belong to the first packet set" comprises that any of packets in the first packet set is user data and the second packet is a control signaling.

In one embodiment, the sentence "the second packet does not belong to the first packet set" comprises that the second packet belongs to a packet set other than the first packet set.

In one embodiment, the sentence "the second packet does not belong to the first packet set" comprises that the second packet is not dependent on any of packets in the first packet set.

In one embodiment, the first packet set includes only the first packet.

In one embodiment, the first packet set includes at least two packets, the first packet being one of the at least two packets.

In one embodiment, for the meaning of the phrase "the first packet being associated to a first LCG", refer to Embodiment 6.

In one embodiment, for the meaning of the phrase "the first LCG being identified by the first LCG ID", refer to Embodiment 6.

In one embodiment, for the meaning of the phrase "the second packet is associated to the first LCG", refer to Embodiment 6.

In one embodiment, the phrase "the first value not indicating a data volume of a second packet" comprises: the first value not counting the data volume of the second packet.

In one embodiment, the phrase "the first value not indicating a data volume of a second packet" comprises: the first value not including the data volume of the second packet.

In one embodiment, the phrase "the first value not indicating a data volume of a second packet" comprises: the data volume of the second packet being not used to determine the first value.

In one embodiment, the phrase "the first value not indicating a data volume of a second packet" comprises: the first value being independent of the data volume of the second packet.

In one embodiment, the first value does not indicate a data volume of at least the second packet.

In one embodiment, the first value does not count a data volume of at least the second packet.

In one embodiment, the first value does not include a data volume of at least the second packet.

In one embodiment, the first value is independent of a data volume of at least the second packet.

In one embodiment, a data volume of at least the second packet is not used to determine the first value.

In one embodiment, the first packet and the second packet are associated to a same DRB.

In one embodiment, the first packet and the second packet are associated to different DRBs.

In one embodiment, the first packet and the second packet are associated to a same PDCP entity.

In one embodiment, the first packet and the second packet are associated to different PDCP entities.

In one embodiment, the first packet has a different PDCP SN than the second packet.

In one embodiment, the first packet is associated to the first identifier, and, the second packet is not associated to the first identifier.

In one embodiment, the first packet belongs to the first packet set, and, the second packet does not belong to the first packet set.

In one embodiment, the first packet is a packet in the first packet set, and, the second packet is not part of the first packet set.

In one embodiment, a logical channel being used to carry the first packet belongs to the first LCG, and, a logical channel being used to carry the second packet belongs to the first LCG.

In one embodiment, a logical channel being used to carry the first packet and a logical channel being used to carry the second packet are the same.

In one embodiment, a logical channel being used to carry the first packet and a logical channel being used to carry the second packet are different.

In one embodiment, a logical channel being used to carry any packet in the first packet set belongs to the first LCG, and, a logical channel being used to carry the second packet belongs to the first LCG.

In one embodiment, a logical channel being used to carry any packet in the first packet set is the same as a logical channel being used to carry the second packet.

In one embodiment, a logical channel being used to carry at least one packet in the first packet set and a logical channel being used to carry the second packet are different.

In one embodiment, a protocol layer to which one packet in the first packet set belongs is a protocol layer above the PDCP sublayer.

In one embodiment, a protocol layer to which one packet in the first packet set belongs is a PDCP sublayer.

In one embodiment, a protocol layer to which one packet in the first packet set belongs is an RLC sublayer.

In one embodiment, each packet in the first packet set is associated to the first LCG.

In one embodiment, at least one packet in the first packet set is not associated to the first LCG.

In one embodiment, the second packet belongs to a different protocol layer than that any of packets in the first packet set belongs to.

In one embodiment, a protocol layer to which the second packet belongs is the same as a protocol layer to which one packet in the first packet set belongs.

In one subembodiment, the protocol layer to which the second packet belongs is the same as the protocol layer to which the first packet belongs.

In one subembodiment, the protocol layer to which the second packet belongs is different from the protocol layer to which the first packet belongs, and the protocol layer to which the second packet belongs is the same as the protocol layer to which a packet other than the first packet in the first packet set belongs.

In one subembodiment, the protocol layer to which the second packet belongs is the same as the protocol layer to which at least one packet in the first packet set belongs.

In one subembodiment, the protocol layer to which the second packet belongs is the same as the protocol layer to which each packet in the first packet set belongs.

In one subembodiment, the second packet belongs to a PDCP sublayer and, the one packet in the first packet set belongs to the PDCP sublayer.

In one subembodiment, the second packet belongs to an RLC sublayer, and, the one packet in the first packet set belongs to the RLC sublayer.

### Embodiment 8

Embodiment 8 illustrates a schematic diagram of a first signaling including a second field according to one embodiment of the present application.

In Embodiment 8, the first signaling includes a second field, the second field indicating the first LCG ID, the second field being associated to the first field.

In one embodiment, the first signaling includes at least a first field and a second field, where the first field includes a first value, the first value indicating a data volume of at least a first packet set, and the second field indicates the first LCG ID, the second field being associated to the first field; the first packet set includes at least one packet; each packet in the first packet set is associated to a first identifier; the first identifier is an identifier other than a LCG ID.

In one embodiment, the first signaling includes at least a first field, a second field and a third field, where the first field includes a first value, the first value indicating a data volume of at least a first packet set, and the second field indicates the first LCG ID, the second field being associated to the first field, and the third field indicates the first identifier, the third field being associated to the first field; the first packet set includes at least one packet; each packet in the first packet set is associated to a first identifier; the first identifier is an identifier other than a LCG ID.

In one embodiment, the first signaling includes at least a first field, a second field and a fourth field, where the first field includes a first value, the first value indicating a data volume of at least a first packet set, and the second field indicates the first LCG ID, the second field being associated to the first field, and the fourth field is used to indicate a first time length, the first time length being related to the first packet set; the first packet set includes at least one packet; each packet in the first packet set is associated to a first identifier; the first identifier is an identifier other than a LCG ID.

In one embodiment, the first signaling includes at least a first field, a second field, a third field and a fourth field, where the first field includes a first value, the first value indicating a data volume of at least a first packet set, and the second field indicates the first LCG ID, the second field being associated to the first field, and the third field indicates the first identifier, the third field being associated to the first field, and the fourth field is used to indicate a first time length, the first time length being related to the first packet set; the first packet set includes at least one packet; each packet in the first packet set is associated to a first identifier; the first identifier is an identifier other than a LCG ID.

In one embodiment, the first signaling does not include the third field in the present application.

In one embodiment, the first signaling does not include the fourth field in the present application.

In one embodiment, the first signaling does not include the third field in the present application and the first signaling does not include the fourth field in the present application.

In one embodiment, the first packet set includes at least a first packet, the first packet being associated to a first LCG, the first LCG being identified by the first LCG ID.

In one embodiment, packets in the first packet set are associated to at least one LCG, the first LCG being an LCG with the smallest LCG ID among the at least one LCG, the first LCG ID being an LCG ID of the first LCG.

In one embodiment, packets in the first packet set are associated to at least one LCG, the first LCG being an LCG with the smallest LCG ID among the at least one LCG, the first LCG ID being an LCG ID of the first LCG.

In one embodiment, the first packet set includes at least a first packet and a second packet, the first packet being associated to a first LCG and the second packet being associated to a second LCG, the first LCG being identified by the first LCG ID, and the second LCG being identified by the second LCG ID, the first LCG ID being unequal to the second LCG ID.

In one subembodiment, the first LCG ID is less than the second LCG ID.

In one subembodiment, the first LCG ID is greater than the second LCG ID.

In one embodiment, the first packet set includes at least a first packet, the first packet being associated to a first LCG, the first LCG being identified by the first LCG ID; the first value does not indicate a data volume of a second packet; the second packet is associated to the first LCG, and the second packet does not belong to the first packet set.

In one embodiment, the first signaling includes BSR MAC CE in its name.

In one embodiment, the first signaling is a BSR MAC CE.

In one embodiment, the first signaling is a Short BSR MAC CE.

In one embodiment, the first signaling is a Short Truncated BSR MAC CE.

In one embodiment, the first signaling is a Long BSR MAC CE.

In one embodiment, the first signaling is a Long Truncated BSR MAC CE.

In one embodiment, the first signaling is a Pre-emptive BSR MAC CE.

In one embodiment, the first signaling is an Extended Short BSR MAC CE.

In one embodiment, the first signaling is an Extended Long BSR MAC CE.

In one embodiment, the first signaling is an Extended Short Truncated BSR MAC CE.

In one embodiment, the first signaling is an Extended Long Truncated BSR MAC CE.

In one embodiment, the first signaling is an Extended Pre-emptive BSR MAC CE.

In one embodiment, the first signaling is not any one of a BSR MAC CE or a Short BSR MAC CE or a Short Truncated BSR MAC CE or a Long BSR MAC CE or a Long Truncated BSR MAC CE or a Pre-emptive BSR MAC CE or an Extended Short BSR MAC CE or an Extended Long BSR MAC CE or an Extended Short Truncated BSR MAC CE or an Extended Long Truncated BSR MAC CE or an Extended Pre-emptive BSR MAC CE.

In one embodiment, the second field is a field in the first signaling.

In one embodiment, the second field is a MAC field.

In one embodiment, the second field indicates the first LCG.

In one embodiment, the second field is set to the first LCG ID.

In one embodiment, the second field is used to indicate the first LCG ID.

In one embodiment, the second field is an LCG ID field, the LCG ID field being set to the first LCG ID.

In one embodiment, the second field is a LCGᵢ field, the i being equal to the first LCG ID.

In one embodiment, the second field is a LCG_{first LCG ID} field.

In one embodiment, the second field is one bit in a first bitmap, and a position of the second field in the first bitmap is used to determine that the second field indicates the first LCG ID.

In one subembodiment, the second field is set to 1.

In one subembodiment, each bit in the first bitmap corresponds to one LCG.

In one subembodiment, one bit in the first bitmap is used to indicate whether a Buffer Size field exists for an LCG corresponding to the one bit.

In one subembodiment, one bit in the first bitmap being set to 1 is used to indicate that the first signaling includes a Buffer Size field for the LCG corresponding to the one bit.

In one subembodiment, one bit in the first bitmap being set to 0 is used to indicate that the first signaling does not include a Buffer Size field for the LCG corresponding to the one bit.

In one subembodiment, one bit in the first bitmap being set to 1 is used to indicate that the LCG corresponding to the one bit has data available.

In one subembodiment, one bit in the first bitmap being set to 0 is used to indicate that the LCG corresponding to the one bit does not have data available.

In one subembodiment, the first bitmap occupies a positive integer number of octet(s).

In one subembodiment, the number of octet(s) occupied by the first bitmap is related to the LCG.

In one subembodiment, the number of octet(s) occupied by the first bitmap is related to a maximum value of the LCG.

In one subembodiment, the number of octet(s) occupied by the first bitmap is variable.

In one subembodiment, the number of octet(s) occupied by the first bitmap is fixed.

In one subembodiment, the first bitmap occupies one octet.

In one subembodiment, the first bitmap occupies two octets.

In one subembodiment, the first bitmap is located before the first field.

In one subembodiment, there exists at least one MAC field between the first bitmap and the first field.

In one subembodiment, there doesn't exist any MAC field between the first bitmap and the first field.

In one subembodiment, the size of the first bitmap is related to the number of LCG(s) with a first report.

In one embodiment, the second field includes K2 bit(s), the K2 being a positive integer.

In one embodiment, K2 is equal to 1.

In one embodiment, K2 is equal to 3.

In one embodiment, K2 is equal to 4.

In one embodiment, K2 is equal to 8.

In one embodiment, K2 is pre-defined.

In one embodiment, K2 is of fixed size.

In one embodiment, K2 is variable.

In one embodiment, the first signaling includes at least one buffer size field, the first field being a data size field among the at least one buffer size field.

In one embodiment, the number of the at least one buffer size field is related to the size of uplink resources.

In one embodiment, the number of the at least one buffer size field is related to an LCP procedure.

### Embodiment 9

Embodiment 9 illustrates a schematic diagram of a first signaling including a third field according to one embodiment of the present application.

In Embodiment 9, the first signaling includes a third field, the third field indicating the first identifier, the third field being associated to the first field.

In one embodiment, the first signaling includes at least a first field and a third field, where the first field includes a first value, the first value indicating a data volume of at least a first packet set, and the third field indicates a first identifier, the third field being associated to the first field; the first packet set includes at least one packet; each packet in the first packet set is associated to the first identifier; the first identifier is an identifier other than a LCG ID.

In one embodiment, the first signaling includes at least a first field, a third field and a fourth field, where the first field includes a first value, the first value indicating a data volume of at least a first packet set, and the third field indicates a first identifier, the third field being associated to the first field, and the fourth field is used to indicate a first time length, the first time length being related to the first packet set; the first packet set includes at least one packet; each packet in the first packet set is associated to the first identifier; the first identifier is an identifier other than a LCG ID.

In one embodiment, the first signaling does not include the second field in the present application.

In one embodiment, the first signaling does not include the fourth field in the present application.

In one embodiment, the first signaling does not include the second field in the present application and the first signaling does not include the fourth field in the present application.

In one embodiment, the first packet set includes at least a first packet and a second packet, the first packet being associated to a first LCG and the second packet being associated to a second LCG, the first LCG being identified by the first LCG ID, and the second LCG being identified by the second LCG ID, the first LCG ID being unequal to the second LCG ID.

In one embodiment, the first packet set includes at least a first packet, the first packet being associated to a first LCG, the first LCG being identified by the first LCG ID; the first value does not indicate a data volume of a second packet; the second packet is associated to the first LCG, and the second packet does not belong to the first packet set.

In one embodiment, the first signaling includes at least the first field, the second field and the third field.

In one embodiment, the first signaling includes at least the first field and the third field, and the first signaling does not include the second field.

In one embodiment, the first signaling includes only the first field and the third field.

In one embodiment, the first signaling includes only the first field, the third field and a reserved field.

In one embodiment, the third field comprises K3 bit(s), the K3 being a positive integer.

In one embodiment, K3 is equal to 1.

In one embodiment, K3 is equal to 3.

In one embodiment, K3 is equal to 4.

In one embodiment, K3 is equal to 5.

In one embodiment, K3 is equal to 8.

In one embodiment, K3 is pre-defined.

In one embodiment, K3 is of fixed size.

In one embodiment, K3 is variable.

In one embodiment, the third field corresponds to the first field.

In one embodiment, the third field is for the first field.

In one embodiment, the third field indicates the first field.

In one embodiment, the third field indicates the presence of the first field.

In one embodiment, the third field is used to indicate an object targeted by the first signaling.

In one embodiment, the third field is used to indicate an object targeted by the first field.

In one embodiment, the third field is a DRB ID field.

In one embodiment, the third field is a field in the first signaling.

In one embodiment, the third field is a MAC field.

In one embodiment, the third field is set to the first identifier.

In one embodiment, the third field indicates a first object.

In one embodiment, the third field is an objectᵢ field, the i being the first identifier.

In one embodiment, the third field is an object_{first identifier} field.

In one embodiment, the third field is one bit in a second bitmap, and a position of the third field in the second bitmap is used to determine that the third field indicates the first identifier.

In one subembodiment, the third field is set to 1.

In one subembodiment, each bit in the second bitmap corresponds to one object.

In one subembodiment, one bit in the second bitmap is used to indicate whether a Data Size field exists for an object corresponding to the one bit.

In one subembodiment, one bit in the second bitmap being set to 1 is used to indicate that the first signaling includes a Data Size field for the object corresponding to the one bit.

In one subembodiment, one bit in the second bitmap being set to 0 is used to indicate that the first signaling does not include a Data Size field for the object corresponding to the one bit.

In one subembodiment, one bit in the second bitmap being set to 1 is used to indicate that the object corresponding to the one bit has data available.

In one subembodiment, one bit in the second bitmap being set to 0 is used to indicate that the object corresponding to the one bit does not have data available.

In one subembodiment, the second bitmap occupies a positive integer number of octet(s).

In one subembodiment, the number of octet(s) occupied by the second bitmap is related to the object.

In one subembodiment, the number of octet(s) occupied by the second bitmap is related to a maximum value of the object.

In one subembodiment, the number of octet(s) occupied by the second bitmap is variable.

In one subembodiment, the number of octet(s) occupied by the second bitmap is fixed.

In one subembodiment, the second bitmap occupies one octet.

In one subembodiment, the second bitmap occupies two octets.

In one subembodiment, the second bitmap is located before the first field.

In one subembodiment, there exists at least one MAC field between the second bitmap and the first field.

In one subembodiment, there doesn't exist any MAC field between the second bitmap and the first field.

In one subembodiment, the size of the second bitmap is related to the number of object(s) with a first report.

In one subembodiment, the data size field refers to a Buffer Size field.

In one subembodiment, the data size field is used to indicate a data volume.

In one subembodiment, the data size field is used to indicate a buffered data volume.

In one subembodiment, the data size field is used to indicate an expected data volume.

In one subembodiment, the data size field is used to indicate a data volume specific to an object.

In one subembodiment, the data size field is used to indicate a remaining data volume specific to an object.

In one subembodiment, the data size field is used to indicate a data volume to be transmitted specific to an object.

In one embodiment, the first signaling includes at least one data size field, the first field being a data size field among the at least one data size field.

In one embodiment, the number of the at least one data size field is related to the size of uplink resources.

In one embodiment, the number of the at least one data size field is related to an LCP procedure.

### Embodiment 10

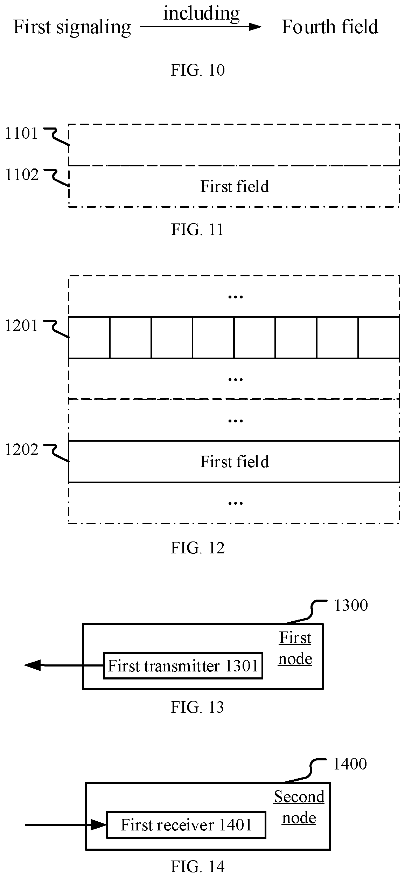

Embodiment 10 illustrates a schematic diagram of a first signaling including a fourth field according to one embodiment of the present application, as shown in FIG. 10.

In Embodiment 10, the first signaling includes a fourth field, the fourth field being used to indicate a first time length, the first time length being related to the first packet set.

In one embodiment, transmit a first signaling, the first signaling including at least a first field and a fourth field, where the first field includes a first value, the first value indicating a data volume of at least a first packet set, and the fourth field is used to indicate a first time length, the first time length being related to the first packet set; the first packet set includes at least one packet; each packet in the first packet set is associated to a first identifier; the first identifier is an identifier other than a LCG ID.

In one embodiment, the first signaling does not include the second field in the present application.

In one embodiment, the first signaling does not include the third field in the present application.

In one embodiment, the first signaling does not include the second field in the present application and the first signaling does not include the third field in the present application.

In one embodiment, the fourth field is set to an index, the index being used to indicate the first time length.

In one embodiment, the fourth field is set to an index, the index being used to indicate a first range of time, the first time length belonging to the first range of time.

In one embodiment, the fourth field is set to the first time length.

In one embodiment, the fourth field and the first field belong to one octet.

In one embodiment, the fourth field and the first field belong to 2 consecutive octets.

In one embodiment, the fourth field and the first field belong to 3 consecutive octets.

In one embodiment, the fourth field includes K4 bit(s), the K4 being a positive integer.

In one embodiment, K4 is equal to 1.

In one embodiment, K4 is equal to 3.

In one embodiment, K4 is equal to 4.

In one embodiment, K4 is equal to 5.

In one embodiment, K4 is equal to 8.

In one embodiment, K4 is pre-defined.

In one embodiment, K4 is of fixed size.

In one embodiment, K4 is variable.

In one embodiment, the first time length is measured in milliseconds.

In one embodiment, the first time length is measured in 10 milliseconds.

In one embodiment, the first time length is measured in seconds.

In one embodiment, the first time length is related to the first packet set.

In one embodiment, the first time length is related to a last packet in the first packet set.

In one embodiment, the first time length is related to a packet with the largest SN in the first packet set.

In one embodiment, the first time length is related to a time budget for the first packet set.

In one embodiment, the first time length is related to a time budget for a last packet in the first packet set.

In one embodiment, the first time length is related to a time budget for a packet with the largest SN in the first packet set.

In one embodiment, the first time length is related to a transmission time of the first packet set.

In one embodiment, the first time length is related to a transmission time of at least one packet in the first packet set.

In one embodiment, the first time length indicates a time budget for the first packet set.

In one embodiment, the time budget means time budget.

In one embodiment, the time budget means including time allocation.

In one embodiment, the time budget means including expected time.

In one embodiment, the time budget means including the required transmission time.

In one embodiment, the time budget means including the remaining transmission time.

### Embodiment 11

Embodiment 11 illustrates a schematic diagram of a first signaling according to one embodiment of the present application, as shown in FIG. 11. It is particularly noted that this example does not limit the fields included in the first signaling, and, this example does not limit the sizes of the fields included in the first signaling, and, this example does not limit the positions of the fields included in the first signaling, and, this example does not limit the first signaling to include other fields.

In one embodiment, the dashed box 1101 is optional.

In one embodiment, the dashed box 1101 is present.

In one embodiment, the dashed box 1101 is not present.

In one embodiment, the dashed box 1101 represents the second field.

In one embodiment, the dashed box 1101 represents the third field.

In one embodiment, the dotted line box 1102 is optional.

In one embodiment, the dotted line box 1102 is present.

In one embodiment, the dotted line box 1102 is not present.

In one embodiment, the box 1102 represents the first field.

In one embodiment, at least one of the dashed box 1101 and the dotted line box 1102 is present.

### Embodiment 12

Embodiment 12 illustrates a schematic diagram of a first signaling according to another embodiment of the present application, as shown in FIG. 12. It is particularly noted that this example does not limit the fields included in the first signaling, and, this example does not limit the sizes of the fields included in the first signaling, and, this example does not limit the positions of the fields included in the first signaling, and, this example does not limit the first signaling to include other fields.

In one embodiment, the dashed box 1201 is optional.

In one embodiment, the dashed box 1201 is present.

In one embodiment, the dashed box 1201 is not present.

In one embodiment, each of the ellipses in the dashed box 1201 is present.

In one embodiment, at least one ellipsis in the dashed box 1201 is not present.

In one embodiment, the dashed box 1201 represents the first bitmap.

In one embodiment, the dashed box 1201 represents the second bitmap.

In one embodiment, the dotted line box 1202 is optional.

In one embodiment, the dotted line box 1202 is present.

In one embodiment, the dotted line box 1202 is not present.

In one embodiment, each of the ellipses in the dashed box 1202 is present.

In one embodiment, at least one ellipsis in the dashed box 1202 is not present.

In one embodiment, the box 1202 represents at least one buffer size field.

In one embodiment, the box 1202 represents at least one data size field.

In one embodiment, at least one of the dashed box 1201 and the dotted line box 1202 is present.

In one embodiment, the dashed box 1201 is present and the dotted-line box 1202 is not present.

In one embodiment, the dashed box 1201 is not present and the dotted-line box 1202 is present.

In one embodiment, both of the dashed box 1201 and the dotted-line box 1202 are present.

### Embodiment 13

Embodiment 13 illustrates a structure block diagram of a processing device used in a first node according to one embodiment of the present application, as shown in FIG. 13. In FIG. 13, a processing device 1300 in a first node comprises a first transmitter 1301.

The first transmitter 1301 transmits a first signaling, the first signaling including a first field, the first field including a first value, the first value indicating a data volume of at least a first packet set.

In Embodiment 13, the first packet set includes at least one packet; each packet in the first packet set is associated to a first identifier; the first identifier is an identifier other than a LCG ID.

In one embodiment, the first packet set includes at least a first packet and a second packet, the first packet being associated to a first LCG and the second packet being associated to a second LCG, the first LCG being identified by the first LCG ID, and the second LCG being identified by the second LCG ID, the first LCG ID being unequal to the second LCG ID.

In one embodiment, the first LCG and the second LCG are each an LCG in a first candidate LCG set, the first candidate LCG set is a subset of a first LCG set, and the first LCG set comprises at least one LCG that is not part of the first candidate LCG set.

In one embodiment, the first packet set includes at least a first packet, the first packet being associated to a first LCG, the first LCG being identified by the first LCG ID; the first value does not indicate a data volume of a second packet; the second packet is associated to the first LCG, and the second packet does not belong to the first packet set.

In one embodiment, the first signaling includes a second field, the second field indicating the first LCG ID, the second field being associated to the first field.

In one embodiment, the first signaling includes a third field, the third field indicating the first identifier, the third field being associated to the first field.

In one embodiment, the first signaling includes a fourth field, the fourth field being used to indicate a first time length, the first time length being related to the first packet set.

In one embodiment, the first transmitter 1301 comprises the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1301 comprises the antenna 452, the transmitter 454, the multi-antenna transmitting processor 457 and the transmitting processor 468 in FIG. 4 of the present application.

In one embodiment, the first transmitter 1301 comprises the antenna 452, the transmitter 454 and the transmitting processor 468 in FIG. 4 of the present application.

### Embodiment 14

Embodiment 14 illustrates a structure block diagram of a processing device used in a second node according to one embodiment of the present application, as shown in FIG. 14. In FIG. 14, a processing device 1400 in a second node comprises a first receiver 1401.

The first receiver 1401 receives a first signaling, the first signaling including a first field, the first field including a first value, the first value indicating a data volume of at least a first packet set.

In Embodiment 14, the first packet set includes at least one packet; each packet in the first packet set is associated to a first identifier; the first identifier is an identifier other than a LCG ID.

In one embodiment, the first packet set includes at least a first packet and a second packet, the first packet being associated to a first LCG and the second packet being associated to a second LCG, the first LCG being identified by the first LCG ID, and the second LCG being identified by the second LCG ID, the first LCG ID being unequal to the second LCG ID.

In one embodiment, the first LCG and the second LCG are each an LCG in a first candidate LCG set, the first candidate LCG set is a subset of a first LCG set, and the first LCG set comprises at least one LCG that is not part of the first candidate LCG set.

In one embodiment, the first packet set includes at least a first packet, the first packet being associated to a first LCG, the first LCG being identified by the first LCG ID; the first value does not indicate a data volume of a second packet; the second packet is associated to the first LCG, and the second packet does not belong to the first packet set.

In one embodiment, the first signaling includes a second field, the second field indicating the first LCG ID, the second field being associated to the first field.

In one embodiment, the first signaling includes a third field, the third field indicating the first identifier, the third field being associated to the first field.

In one embodiment, the first signaling includes a fourth field, the fourth field being used to indicate a first time length, the first time length being related to the first packet set.

In one embodiment, the first receiver 1401 comprises the antenna 420, the receiver 418, the multi-antenna receiving processor 472, the receiving processor 470, the controller/processor 475 and the memory 476 in FIG. 4 of the present application.

In one embodiment, the first receiver 1401 comprises the antenna 420, the receiver 418, the multi-antenna receiving processor 472 and the receiving processor 470 in FIG. 4 of the present application.

In one embodiment, the first receiver 1401 comprises the antenna 420, the receiver 418 and the receiving processor 470 in FIG. 4 of the present application.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The UE and terminal in the present application include but are not limited to unmanned aerial vehicles, communication modules on unmanned aerial vehicles, telecontrolled aircrafts, aircrafts, diminutive airplanes, mobile phones, tablet computers, notebooks, vehicle-mounted communication equipment, wireless sensor, network cards, terminals for Internet of Things (IOT), RFID terminals, NB-IOT terminals, Machine Type Communication (MTC) terminals, enhanced MTC (eMTC) terminals, data cards, low-cost mobile phones, low-cost tablet computers, etc. The base station or system device in the present application includes but is not limited to macro-cellular base stations, micro-cellular base stations, home base stations, relay base station, gNB (NR node B), Transmitter Receiver Point (TRP), and other radio communication equipment.

The above are merely the preferred embodiments of the present application and are not intended to limit the scope of protection of the present application. Any modification, equivalent substitute and improvement made within the spirit and principle of the present application are intended to be included within the scope of protection of the present application.

## Claims

1. A first node for wireless communications, comprising:
a first transmitter, transmitting a first signaling, the first signaling including a first field, the first field including a first value, the first value indicating a data volume of at least a first packet set;
wherein the first packet set includes at least one packet; each packet in the first packet set is associated to a first identifier; the first identifier is an identifier other than an LCG ID.

2. The first node according to claim 1, **characterized in that** the first packet set includes at least a first packet and a second packet, the first packet being associated to a first LCG and the second packet being associated to a second LCG, the first LCG being identified by the first LCG ID, and the second LCG being identified by the second LCG ID, the first LCG ID being unequal to the second LCG ID.

3. The first node according to claim 2, **characterized in that** the first LCG and the second LCG are each an LCG in a first candidate LCG set, the first candidate LCG set is a subset of a first LCG set, and the first LCG set comprises at least one LCG that does not belong to the first candidate LCG set.

4. The first node according to claim 1, **characterized in that** the first packet set includes at least a first packet, the first packet being associated to a first LCG, the first LCG being identified by the first LCG ID; the first value does not indicate a data volume of a second packet; the second packet is associated to the first LCG, and the second packet does not belong to the first packet set.

5. The first node according to any of claims 2-4, **characterized in that** the first signaling includes a second field, the second field indicating the first LCG ID, the second field being associated to the first field.

6. The first node according to any of claims 1-5, **characterized in that** the first signaling includes a third field, the third field indicating the first identifier, the third field being associated to the first field.

7. The first node according to any of claims 1-6, **characterized in that** the first signaling includes a fourth field, the fourth field being used to indicate a first time length, the first time length being related to the first packet set.

8. A second node for wireless communications, comprising:
a first receiver, receiving a first signaling, the first signaling including a first field, the first field including a first value, the first value indicating a data volume of at least a first packet set;
wherein the first packet set includes at least one packet; each packet in the first packet set is associated to a first identifier; the first identifier is an identifier other than an LCG ID.

9. A method in a first node for wireless communications, comprising:
transmitting a first signaling, the first signaling including a first field, the first field including a first value, the first value indicating a data volume of at least a first packet set;
wherein the first packet set includes at least one packet; each packet in the first packet set is associated to a first identifier; the first identifier is an identifier other than an LCG ID.

10. A method in a second node for wireless communications, comprising:
receiving a first signaling, the first signaling including a first field, the first field including a first value, the first value indicating a data volume of at least a first packet set;
wherein the first packet set includes at least one packet; each packet in the first packet set is associated to a first identifier; the first identifier is an identifier other than an LCG ID.
